# EUROPEAN PATENT APPLICATION

(11) **EP 3 438 879 A1**
(43) Date of publication of application: **06.02.2019**
(21) Application number: 18184981.1
(22) Date of filing: 23.07.2018
(51) Int. Cl.: G06K 9/00, G06K 9/20

(54) **TERMINAL DEVICE, IRIS RECOGNITION APPARATUS AND IRIS RECOGNITION METHOD**

(30) Priority: 31.07.2017 CN 201710643817
(71) Applicant: Guangdong Oppo Mobile Telecommunications Corp., Ltd, Dongguan, Guangdong 523860 (CN)
(72) Inventor: ZHOU, Yibao, Dongguan, Guangdong 523860 (CN)
(74) Representative: Papa, Elisabetta

(57) **Abstract**

The present disclosure provides an iris recognition apparatus (41), an iris recognition method for a terminal device, a terminal device and a computer storage medium. The apparatus (41) includes an iris camera (413), an infrared fill light (414) and a control component (411). The iris camera (413) is configured to capture an iris image for iris recognition. The infrared fill light (414) is configured to emit infrared light based on a pulse control signal when the iris camera (413) captures the iris image. The control component (411) is configured to output the pulse control signal to control the infrared fill light (414) to emit the infrared light in pulses.

## Description

### FIELD

The present disclosure relates to a field of terminal technologies, and more particularly to an iris recognition apparatus, an iris recognition method for a terminal device and a terminal device.

### BACKGROUND

Typically, iris recognition is realized by iris information matching. When the iris information is acquired, infrared light may be emitted by an infrared fill light; when the infrared light illuminates human eyes, the human eyes may be photographed by an iris camera; the iris information of the human eyes may be acquired based on the photographed image, and matching is performed based on the iris information.

However, in the iris recognition process described above, it needs a filling capability of the infrared fill light to meet certain requirements. For example, with a distance of 40cm, when the eyes are illuminated by the infrared light from the infrared fill light, an illumination intensity of the infrared light received by each eye must reach 400 µw/cm², otherwise the iris cannot be recognized.

### SUMMARY

Embodiments of a first aspect of the present disclosure provide an iris recognition apparatus. The apparatus includes an iris camera, an infrared fill light and a control component. The iris camera is configured to capture an iris image for iris recognition. The infrared fill light is configured to emit infrared light based on a pulse control signal when the iris camera captures the iris image. The control component is configured to output the pulse control signal to control the infrared fill light to emit the infrared light in pulses.

In embodiments of the present disclosure, the control component is further configured to acquire the iris image, to extract an iris feature from the iris image, to match the iris feature with a preset iris feature, and to determine that iris recognition corresponding to the iris image is successful when the iris feature matches with the preset iris feature.

In embodiments of the present disclosure, the pulse control signal includes a rectangular pulse signal.

In embodiments of the present disclosure, the infrared fill light is configured to emit the infrared light during a period of each high level of the rectangular pulse signal, and to stop emitting the infrared light during a period of each low level of the rectangular pulse signal.

In embodiments of the present disclosure, a duty ratio of the rectangular pulse signal is 1/3.

In embodiments of the present disclosure, a period of each high level of the rectangular pulse signal is 30 milliseconds, and a period of each low level of the rectangular pulse signal is 60 milliseconds.

In embodiments of the present disclosure, the control component is further configured to stop emitting the infrared light when the iris camera is closed.

Embodiments of a second aspect of the present disclosure provide an iris recognition method for a terminal device. The terminal device includes an iris camera and an infrared fill light. The method includes: outputting a pulse control signal; controlling the infrared fill light to emit infrared light based on the pulse control signal; and when the infrared fill light emits the infrared light, controlling the iris camera to capture an iris image for iris recognition.

In embodiments of the present disclosure, the pulse control signal includes a rectangular pulse signal.

In embodiments of the present disclosure, controlling the infrared fill light to emit infrared light based on the pulse control signal includes controlling the infrared fill light to emit the infrared light during a period of each high level of the rectangular pulse signal; and controlling the infrared fill light to stop emitting the infrared light during a period of each low level of the rectangular pulse signal.

In embodiments of the present disclosure, a duty ratio of the rectangular pulse signal is 1/3.

In embodiments of the present disclosure, a period of each high level of the rectangular pulse signal is 30 milliseconds, and a period of each low level of the rectangular pulse signal is 60 milliseconds.

In embodiments of the present disclosure, the iris recognition method further includes stopping emitting the infrared light when the iris camera is closed.

Embodiments of a third aspect of the present disclosure provide a computer storage medium, having computer programs stored thereon. When the computer programs are executed by a terminal device including an iris camera and an infrared fill light, the terminal device is caused to perform an iris recognition method according to embodiments of the first aspect of the present disclosure.

Embodiments of a fourth aspect of the present disclosure provide a terminal device. The terminal device includes a housing, a processor, a memory, a circuit board, an iris camera, an infrared fill light and a control component. The circuit board is disposed inside a space enclosed by the housing. The processor and the memory are disposed on the circuit board. The iris camera is configured to capture an iris image for iris recognition. The infrared fill light is configured to emit infrared light based on a pulse control signal when the iris camera captures the iris image. The control component is configured to output the pulse control signal to control the infrared fill light to emit the infrared light in pulses.

Additional aspects and advantages of embodiments of the present disclosure will be given in part in the following descriptions, become apparent in part from the following descriptions, or be learned from the practice of the embodiments of the present disclosure.

### BRIEF DESCRIPTION OF THE DRAWINGS

The above or additional aspects and advantages of the present disclosure will become apparent and more readily appreciated from the following descriptions made with reference to the drawings, in which:
Fig. 1 is a schematic diagram illustrating an application scenario of iris recognition.
Fig. 2 is an anatomical diagram of an eye.
Fig. 3 is a structural diagram of an eyeball.
Fig. 4 is a block diagram illustrating an iris recognition apparatus for a terminal device provided in one or more embodiments of the present disclosure.
Fig. 5 is a schematic diagram illustrating a pulse emitting mode.
Fig. 6 is a block diagram illustrating a terminal device provided in one or more embodiments of the present disclosure.
Fig. 7 is a flow chart illustrating an iris recognition method for a terminal device provided in one or more embodiments of the present disclosure.

### DETAILED DESCRIPTION

Reference will now be made in detail to exemplary embodiments, examples of which are illustrated in the accompanying drawings, in which the same or similar reference numbers throughout the drawings represent the same or similar elements or elements having same or similar functions. Embodiments described below with reference to drawings are merely exemplary and used for explaining the present disclosure and should not be understood as limitation to the present disclosure.

In the iris recognition process, it needs a filling capability of the infrared fill light to meet certain requirements. For example, with a distance of 40cm, when the eyes are illuminated by the infrared light from the infrared fill light, an illumination intensity of the infrared light received by each eye must reach 400 µw/cm², otherwise the iris cannot be recognized.

In addition, in the iris recognition process, when the iris camera captures the iris image, the infrared fill light is turned on and emits the infrared light constantly. The illumination intensity of the infrared light emitted by the infrared fill light depends on a current for emitting the infrared light in the infrared fill light. The larger the current, the larger the illumination intensity. Therefore, the illumination intensity of the infrared light emitted by the infrared fill light may be increased by increasing the current, thereby increasing the illumination intensity of the infrared light received by eyes.

The inventors have found that, if the current for emitting the infrared light in the infrared fill light is increased, temperature of the infrared fill light may be increased accordingly. Since the larger the current, the larger the temperature of the infrared fill light, and a heat-resistant ability of the infrared fill light is limited, the illumination intensity will be reduced when the temperature is too high. Therefore, by purely increasing the current, it is unable to effectively increase the illumination intensity of the infrared fill light.

The present disclosure relates to an iris recognition apparatus. The apparatus includes an iris camera, an infrared fill light and a control component. The iris camera is configured to capture an iris image for iris recognition. The infrared fill light is configured to emit infrared light based on a pulse control signal when the iris camera captures the iris image. The control component is configured to output the pulse control signal to control the infrared fill light to emit the infrared light in pulses.

The present disclosure relates to a terminal device. The terminal device includes a housing, a processor, a memory, a circuit board, an iris camera, an infrared fill light and a control component. The circuit board is disposed inside a space enclosed by the housing. The processor and the memory are disposed on the circuit board. The iris camera is configured to capture an iris image for iris recognition. The infrared fill light is configured to emit infrared light based on a pulse control signal when the iris camera captures the iris image. The control component is configured to output the pulse control signal to control the infrared fill light to emit the infrared light in pulses.

The present disclosure relates to an iris recognition method for a terminal device. The terminal device includes an iris camera and an infrared fill light. The method includes: outputting a pulse control signal; controlling the infrared fill light to emit infrared light based on the pulse control signal; and when the infrared fill light emits the infrared light, controlling the iris camera to capture an iris image for iris recognition.

The present disclosure relates to a computer storage medium on which computer programs are stored. When the computer programs are executed by a terminal device including an iris camera and an infrared fill light, the terminal device is caused to perform: outputting a pulse control signal; controlling the infrared fill light to emit infrared light based on the pulse control signal; and when the infrared fill light emits the infrared light, controlling the iris camera to capture an iris image for iris recognition.

The present disclosure relates to a computer program product. When instructions in the computer program product are executed by a terminal device including an iris camera and an infrared fill light, the terminal device is caused to perform: outputting a pulse control signal; controlling the infrared fill light to emit infrared light based on the pulse control signal; and when the infrared fill light emits the infrared light, controlling the iris camera to capture an iris image for iris recognition.

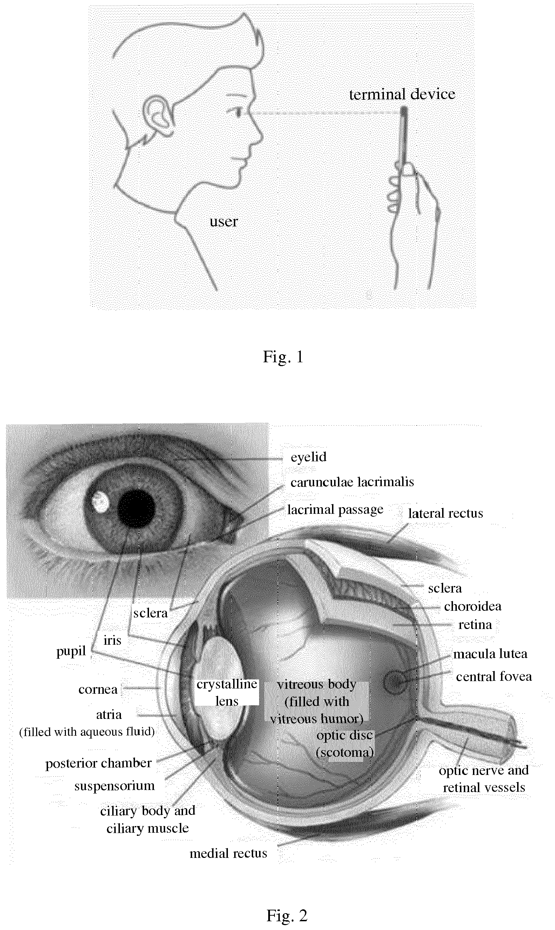

Fig. 1 is a schematic diagram illustrating an application scenario of iris recognition. As illustrated in Fig. 1, a user holds, via a hand, a terminal device having an unlock function realized based on the iris recognition. When the terminal device receives an unlock instruction from the user, an iris camera is turned on. The iris camera captures an image of eyes of the user, so as to acquire iris information included in the image. The unlock function is achieved by performing matching recognition based on the iris information.

Fig.2 is an anatomical diagram of an eye. As illustrated in Fig. 2, the iris is an annular area between the pupil (commonly called as the black of the eye) of the eye and the sclera (commonly called as the white of the eye) of the eye, which is a muscular tissue and is externally visible. The iris is mainly configured to control a size of the pupil so as to control a total amount of light entering the retina. A particular position of the iris may be referred to Fig. 2.

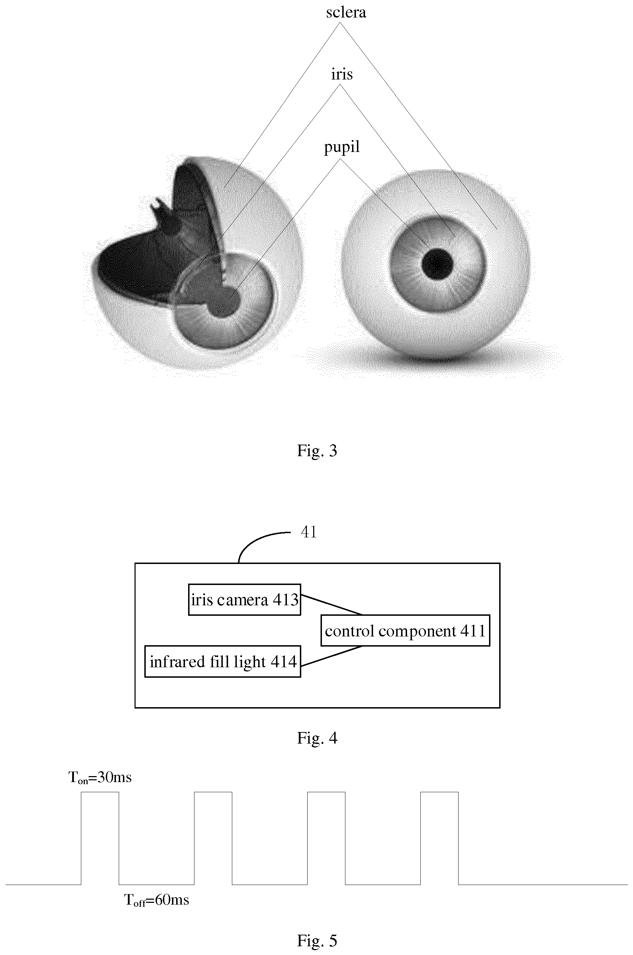

Fig. 3 is a structural diagram of an eyeball. As illustrated in Fig. 3, the eyeball is of ball structure, with rich vascular tissues in inner wall. Only through the pupil, can light rays enter, which looks like that the pupil is a small opening on a ball.

Fig. 4 is a block diagram illustrating an iris recognition apparatus for a terminal device provided in one or more embodiments of the present disclosure. As illustrated in Fig. 4, the apparatus 41 includes an iris camera 413, an infrared fill light 414 and a control component 411. The apparatus 41 may be disposed on a terminal device. The terminal device may have the iris recognition function, such as security devices like safes or strongboxes, or smart devices like tablets, laptops, personal computers, smart phones, or the like.

The iris camera 413 is configured to capture an iris image for iris recognition. The infrared fill light 414 is configured to emit infrared light based on a pulse control signal when the iris camera captures the iris image. The control component 411 is configured to output the pulse control signal to control the infrared fill light 414 to emit the infrared light in pulses. The control component 411 may be a logic control circuit, a switch circuit, a microcontroller, an integrated circuit (IC) control chip, or the like.

In one or more embodiments of the present disclosure, the control component 411 may detect an on or off status of the iris camera 413 in real time. The iris camera 413 is turned on when an iris recognition instruction is received and is turned off when an iris recognition completion instruction is received. The iris recognition instruction may be sent by the control component 411 or may be sent by the terminal device. For example, after receiving the iris unlocking instruction, the terminal device may directly send the iris recognition instruction to the iris camera 413 or send the iris recognition instruction to the control component 411 to control turning on or off of the iris camera 413.

If the iris camera 413 captures the iris image (i.e., if it is detected that the iris camera 413 is turned on), the control unit 411 sends the pulse control signal to the infrared fill light 414 to control the infrared fill light 414 to emit the infrared light based on the pulse control signal. That is, the infrared fill light 414 is controlled in a pulse emitting mode.

In the pulse emitting mode, as illustrated in Fig. 5, the infrared fill light 414 is periodically turned on or off, i.e., periodically emits the infrared light.

In one or more embodiments of the present disclosure, the pulse control signal includes a rectangular pulse signal. In one or more embodiments of the present disclosure, the infrared fill light 414 is configured to emit the infrared light during a period of each high level of the rectangular pulse signal, and to stop emitting the infrared light during a period of each low level of the rectangular pulse signal.

As a feasible implementation, within one period in the pulse emitting mode, a duration when the infrared fill light 414 is in the off state is 1.5 to 2.5 times of a duration when the infrared fill light 414 is in an on state, for example 2 times, i.e., T_{off}/Tₒₙ=2/1. In other words, a duty cycle of the infrared light emitted by the infrared fill light 414 in the pulse emitting mode is Tₒₙ/(Tₒₙ+T_{off}) =1/3. For example, within one period in the pulse emitting mode, the duration when the infrared fill light 414 is in the on state is Tₒₙ=30 milliseconds (ms), while the duration when the infrared fill light 414 is in the off state is T_{off}=60 milliseconds (ms).

In one or more embodiments of the present disclosure, the control component 414 is further configured to acquire the iris image, and extracting an iris feature from the iris image, to match the iris feature with a preset iris feature, and to determine that iris recognition corresponding to the iris image is successful when the iris feature matches with the preset iris feature.

In one or more embodiments of the present disclosure, the control component 414 is further configured to stop emitting the infrared light when the iris camera is closed. At this point, the infrared fill light 414 is turned off, i.e. no infrared light is emitted.

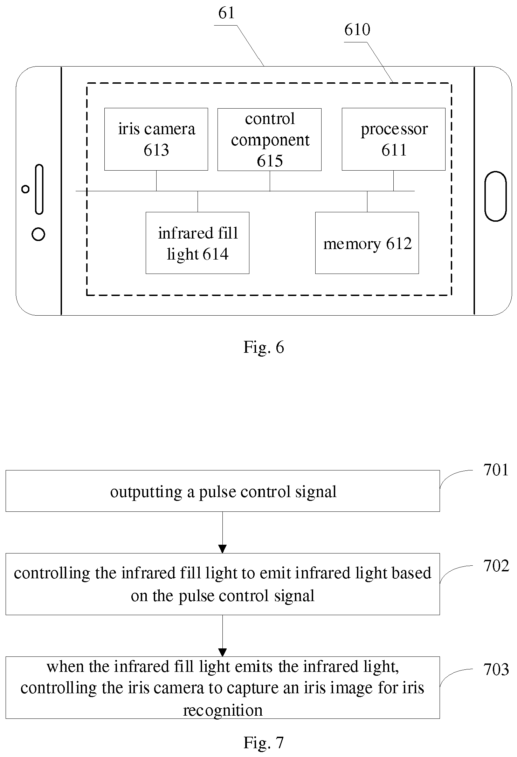

Embodiments of the present disclosure further provide a terminal device. Fig. 6 is a schematic diagram illustrating a terminal device provided in one or more embodiments of the present disclosure. As illustrated in Fig. 6, the terminal device includes following one or more components: a housing 61, a circuit board 610, as a processor 611, a memory 612, an iris camera 613, an infrared fill light 614 and a control component 615. The one or more components such as the processor 611, the memory 612, the iris camera 613, the infrared fill light 614 and the control component 615 may be disposed on the circuit board 610. The circuit board 610 may be disposed inside a space enclosed by the housing 61. The processor 611 is configured to run programs corresponding to executable program codes by reading the executable program codes stored in the memory 612. The iris camera 613 is configured to capture an iris image for iris recognition. The infrared fill light 614 is configured to emit infrared light based on a pulse control signal when the iris camera captures the iris image. The control component 615 is configured to output the pulse control signal to control the infrared fill light 614 to emit the infrared light in pulses. For the iris camera 613, reference may be made to the iris camera 413 in the foregoing embodiment. For the infrared fill light 614, reference may be made to the infrared fill light 414 in the above embodiment. For the control component 615, reference may be made to the control component 415 in the foregoing embodiment. Details of them are not described herein again.

The present disclosure also provides an iris recognition method for a terminal device.

Fig. 7 is a flow chart illustrating an iris recognition method for a terminal device provided in one or more embodiments of the present disclosure. The iris recognition method for a terminal device in one or more embodiments of the present disclosure may be applied to various existing terminal devices with an iris recognition function, such as security devices like safes or strongboxes, or smart devices like tablets, laptops, personal computers, smart phones, or the like. As illustrated in Fig. 7, the method includes the acts in the following blocks.

At block 701, a pulse control signal is outputted.

At block 702, the infrared fill light is controlled to emit infrared light based on the pulse control signal.

At block 703, when the infrared fill light emits the infrared light, the iris camera is controlled to capture an iris image for iris recognition.

In one or more embodiments of the present disclosure, the infrared fill light is periodically turned on or off under the control of the pulse control signal. For example, as illustrated in Fig. 5, the infrared fill light periodically emits the infrared light. In detail, reference may be made to the above apparatus embodiment, it will not be repeated here.

In the solution of the present disclosure, when it is detected that the iris camera is turned on, the infrared fill light is controlled to emit the infrared light periodically, instead of constantly emitting the infrared light, such that heat of the infrared fill light may not be continuously accumulated, and temperature of the infrared fill light may not be continuously increased. Therefore, during a process of increasing the illumination intensity of the infrared fill light by increasing the current, an impact of temperature rise of the infrared fill light to the illumination intensity increasing is effectively reduced, thereby achieving a goal of increasing the illumination intensity of the infrared fill light by purely increasing the current, which provides a sufficient illumination intensity for the iris recognition and ensures successful progress of the iris recognition.

In the description of the specification, reference throughout this specification to "an embodiment," "some embodiments," "an example," "a specific example," or "some examples," means that a particular feature, structure, material, or characteristic described in connection with the embodiment or example is included in at least one embodiment or example of the present disclosure. In this specification, exemplary descriptions of aforesaid terms are not necessarily referring to the same embodiment or example. Furthermore, the particular features, structures, materials, or features may be combined in any suitable manner in one or more embodiments or examples. Moreover, those skilled in the art could combine different embodiments or different features in embodiments or examples described in the present disclosure.

Moreover, terms of "first" and "second" are only used for description and cannot be seen as indicating or implying relative importance or indicating or implying the number of the indicated technical features. Thus, the features defined with "first" and "second" may comprise or imply at least one of these features. In the description of the present disclosure, the term "a plurality of' means at least two, such as two, three or the like, unless specified otherwise.

Any process or method described in a flow chart or described herein in other ways may be understood to include one or more modules, segments or portions of codes of executable instructions for achieving specific logical functions or steps in the process, and the scope of a preferred embodiment of the present disclosure includes other implementations, wherein the order of execution may differ from that which is depicted or discussed, including according to involved function, executing concurrently or with partial concurrence or in the contrary order to perform the function, which should be understood by those skilled in the art.

The logic and/or step described in other manners herein or shown in the flow chart, for example, a particular sequence table of executable instructions for realizing the logical function, may be specifically achieved in any computer readable medium to be used by the instruction execution system, device or equipment (such as the system based on computers, the system comprising processors or other systems capable of acquiring the instruction from the instruction execution system, device and equipment and executing the instruction), or to be used in combination with the instruction execution system, device and equipment. As to the specification, "the computer readable medium" may be any device adaptive for including, storing, communicating, propagating or transferring programs to be used by or in combination with the instruction execution system, device or equipment. More specific examples of the computer-readable medium comprise (a non-exhaustive list): an electronic connection (an electronic device) with one or more wires, a portable computer enclosure (a magnetic device), a random access memory (RAM), a read-only memory (ROM), an erasable programmable read-only memory (EPROM or a flash memory), an optical fiber device and a portable compact disk read-only memory (CDROM). In addition, the computer-readable medium may even be a paper or other appropriate medium capable of printing programs thereon, this is because, for example, the paper or other appropriate medium may be optically scanned and then edited, decrypted or processed with other appropriate methods when necessary to obtain the programs in an electric manner, and then the programs may be stored in the computer memories.

It should be understood that each part of the present disclosure may be realized by hardware, software, firmware or their combination. In the above embodiments, a plurality of steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

Those skilled in the art shall understand that all or parts of the steps in the above exemplifying method for the present disclosure may be achieved by commanding the related hardware with programs, the programs may be stored in a computer-readable storage medium, and the programs comprise one or a combination of the steps in the method embodiments of the present disclosure when running on a computer.

In addition, each function cell of the embodiments of the present disclosure may be integrated in a processing module, or these cells may be separate physical existence, or two or more cells are integrated in a processing module. The integrated module may be realized in a form of hardware or in a form of software function modules. When the integrated module is realized in a form of software function module and is sold or used as a standalone product, the integrated module may be stored in a computer-readable storage medium.

The storage medium mentioned above may be read-only memories, magnetic disks, CD, etc. Although embodiments of present disclosure have been shown and described above, it should be understood that above embodiments are just explanatory, and cannot be construed to limit the present disclosure, for those skilled in the art, changes, variations, alternatives, and modifications can be made to the embodiments within the scope of the present disclosure.

## Claims

1. An iris recognition apparatus (41), comprising:
an iris camera (413), configured to capture an iris image for iris recognition;
an infrared fill light (414), configured to emit infrared light based on a pulse control signal when the iris camera (413) captures the iris image; and
a control component (411), configured to output the pulse control signal to control the infrared fill light (414) to emit the infrared light in pulses.

2. The apparatus (41) according to claim 1, wherein the control component (411) is further configured to acquire the iris image, to extract an iris feature from the iris image, to match the iris feature with a preset iris feature, and to determine that iris recognition corresponding to the iris image is successful when the iris feature matches with the preset iris feature.

3. The apparatus (41) according to claim 1 or 2, wherein the pulse control signal comprises a rectangular pulse signal.

4. The apparatus (41) according to claim 3, wherein the infrared fill light (414) is configured to emit the infrared light during a period of each high level of the rectangular pulse signal, and to stop emitting the infrared light during a period of each low level of the rectangular pulse signal.

5. The apparatus (41) according to claim 3 or 4, wherein a duty ratio of the rectangular pulse signal is 1/3.

6. The apparatus (41) according to claim 5, wherein a period of each high level of the rectangular pulse signal is 30 milliseconds, and a period of each low level of the rectangular pulse signal is 60 milliseconds.

7. The apparatus (41) according to any one of claims 1 to 6, wherein the control component (411) is further configured to stop emitting the infrared light when the iris camera (413) is closed.

8. An iris recognition method for a terminal device, the terminal device comprising an iris camera (613) and an infrared fill light (614), and the method comprising:
outputting (701) a pulse control signal;
controlling (702) the infrared fill light (614) to emit infrared light based on the pulse control signal; and
when the infrared fill light (614) emits the infrared light, controlling (703) the iris camera (613) to capture an iris image for iris recognition.

9. The method according to claim 8, wherein the pulse control signal comprises a rectangular pulse signal.

10. The method according to claim 9, wherein controlling (702) the infrared fill light (614) to emit infrared light based on the pulse control signal comprises:
controlling the infrared fill light (614) to emit the infrared light during a period of each high level of the rectangular pulse signal; and
controlling the infrared fill light (614) to stop emitting the infrared light during a period of each low level of the rectangular pulse signal.

11. The method according to claim 9 or 10, wherein a duty ratio of the rectangular pulse signal is 1/3.

12. The method according to claim 11, wherein a period of each high level of the rectangular pulse signal is 30 milliseconds, and a period of each low level of the rectangular pulse signal is 60 milliseconds.

13. The method according to any one of claims 8 to 12, further comprising:
stopping emitting the infrared light when the iris camera (613) is closed.

14. A computer storage medium, having computer programs stored thereon, wherein when the computer programs are executed by a terminal device including an iris camera (613) and an infrared fill light (614), the terminal device is caused to perform an iris recognition method according to any one of claims 8 to 13.

15. A terminal device, comprising:
a housing (61);
a processor (611);
a memory (612);
a circuit board (610), the circuit board (610) being disposed inside a space enclosed by the housing (61), and the processor (611) and the memory (612) being disposed on the circuit board(610); and
an iris recognition apparatus (41) according to any one of claims 1 to 7.
